# EUROPEAN PATENT APPLICATION

(11) **EP 2 924 983 A1**
(43) Date of publication of application: **30.09.2015**
(21) Application number: 14305445.0
(22) Date of filing: 27.03.2014
(51) Int. Cl.: H04N 7/10

(54) **Galvanic isolation device, connector and associated item of equipment**

(71) Applicant: Thomson Licensing, 92130 Issy-les-Moulineaux (FR)
(72) Inventor: Guitton, Xavier, 35576 Cesson-Sévigné (FR); Lepoil, Philippe, 35576 Cesson-Sévigné (FR)
(74) Representative: Huchet, Anne

(57) **Abstract**

The invention relates to an electronic device (STB1) comprising a wired communication interface (IC1) for receiving signals, the wired communication interface (IC1) comprising a connector (C1) suitable for the connection of a cable (RF1) and at least one electronic interfacing circuit (IF1) for transmitted signals, the wired communication interface (IC1) being realized such that the connector (C1) and the interfacing circuit (IF1) are connected by a circuit (IG1) suitable for galvanic isolation thus ensuring the absence of DC signal continuity and the absence of earth connection via the connector (C1) the connector (C1) being mounted in a face (RP1) of a mechanical casing (B1), said face (RP1) comprising a window wherein is inserted an isolating element (W1) around the connector (C1) or said face (RP1) being made of isolating material.

## Description

### 1. Field of the invention.

The invention relates to the field of interconnected home electronic equipment in an environment comprising at least one class 1 device with an electrical earth connection and at least one class 2 device without electrical earth connection, the two devices being interconnected by a wired connection.

### 2. Prior Art.

Home electronic devices are categorised into several classes. These classes correspond to a set of electrical and/or mechanical characteristics. One of these characteristics which is taken into consideration in defining the class of an item of equipment is the presence or absence of an earth connection of the mains network of the device concerned, the connection being made by an earth conductor.

Classes 1 and 2, for example, are respectively described in standards document paragraphs IEC 61140 2001, 7-1 and IEC61140 2001, 7-3.

In recent years, electronic devices for home use have been connected to the mains network with an earth conductor (electrical class 1). Previously, these products were categorized in electrical class 2 and none of their circuits were therefore connected to earth.

This modification has the effect of making the occurrence of current loops possible according to other parameters of the installations.

In fact, according to the characteristics of the installations constituted by the different elements for supplying, connecting and transporting signals and according to the characteristics of the interconnected devices, problems, disturbances or degradations may arise.

More specifically, due to existing disparities in the quality of electrical connections to earth, and any connections of the neutral connector to earth, noticeable disparities in electrical potentials may be created at points of the installation which are theoretically to be at identical electrical potentials. These disparities in electrical potentials result in induced current loops. These induced currents cross the devices and can in certain cases degrade or destroy circuits or elements for interconnection between the devices. It is possible, for example, between a television receiver-decoder device and a television set, to see HDMI connection cables partially or completely burnt and the associated interfaces destroyed or rendered inoperative.

### 3. Summary of the invention.

The invention enables the situation to be improved by advantageously making it possible to avoid current loop phenomena. The risks of damage, overheating and fire associated with the passage of inappropriate currents in the devices or in the interconnection elements are thus consequently reduced.

More specifically, the invention relates to an electronic device comprising a wired communication interface for the reception of signals, the communication interface comprising a connector suitable for the connection of a cable and at least one electronic interfacing circuit for transmitted signals, the wired communication interface being realized so that the connector and the interfacing circuit are connected by a circuit suitable for galvanic isolation, thus ensuring the absence of DC signal continuity and the absence of earth connection via the connector.

According to an embodiment of the invention, the electronic device is suitable for receiving audiovisual programs via an interface suitable for receiving radio frequency signals over a cable network.

By "radio frequency" signals is understood, in the paragraphs which follow, signals of high frequency comprising all frequencies supported and used in a cable transmission system.

According to an embodiment of the invention, the cable network is a collective network.

According to an embodiment of the invention, the electronic device comprises a motherboard and a connection cable interfacing module (cable communication interface), the module being separate from the motherboard, the module comprising the connector.

According to an embodiment of the invention, the connector is located on the connection cable interfacing module and a galvanic isolation device is inserted between the motherboard and the interfacing module.

Advantageously, the electronic device comprises a mechanical casing having a face bearing the connector, the face being made of plastic material, and therefore being nonconductive.

According to a variant embodiment of the invention, the electronic device comprises a mechanical casing having a face (or a side) bearing the connector, the face being metallic and comprising a window wherein is inserted a plastic element (or an element made of any isolating material) placed around the connector. The presence of such a plastic material in a window having a minimum predetermined size, in addition of the others above-cited features for making galvanic insulation, strengthens the overall performance of the galvanic insulation of the signal connection and consequently improve the capacity to avoid some unexpected disparities in electrical potentials and some induced current loops.

The invention also relates to a connection device suitable, according to the inventive concept, for the connection of a cable for receiving radio frequency signals and comprising at least four electrical connection elements, the electrical connection elements being respectively connected pairwise via the intermediary of a galvanic isolation device.

According to an embodiment of the invention, the galvanic isolation device comprised in the connection device is a transformer comprising at least two windings.

According to a variant, the galvanic isolation device comprised in the connection device comprises at least two capacitors; the capacitors being galvanic isolators.

The invention further relates to an electronic device comprising the connection device, which comprises the galvanic isolation device.

### 4. List of figures.

The invention will be better understood, and other specific features and advantages will emerge upon reading the following description, the description making reference to the annexed drawings wherein:
- Figure 1 shows an installation comprising a cable digital television receiver-decoder device connected to a television set.
- Figure 2 shows the installation of figure 2 in the presence of an induced current loop.
- Figure 3 shows the digital television receiver-decoder device of the installation shown in figure 1 and 2, according to a first embodiment of the invention.
- Figure 4 shows the digital television receiver-decoder device of the installation shown in figure 1 and 2, according to a second embodiment of the invention.
- Figure 5 shows a connector for connecting to a distribution cable according to the second embodiment of the invention.
- Figure 6 shows a variant of the connector shown in figure 5.
- Figure 7 shows the digital television receiver-decoder device which appears in figures 1 to 4 and shows its rear face, which bears a connector suitable for connection to a cable network.

### 5. Detailed description of embodiments of the invention.

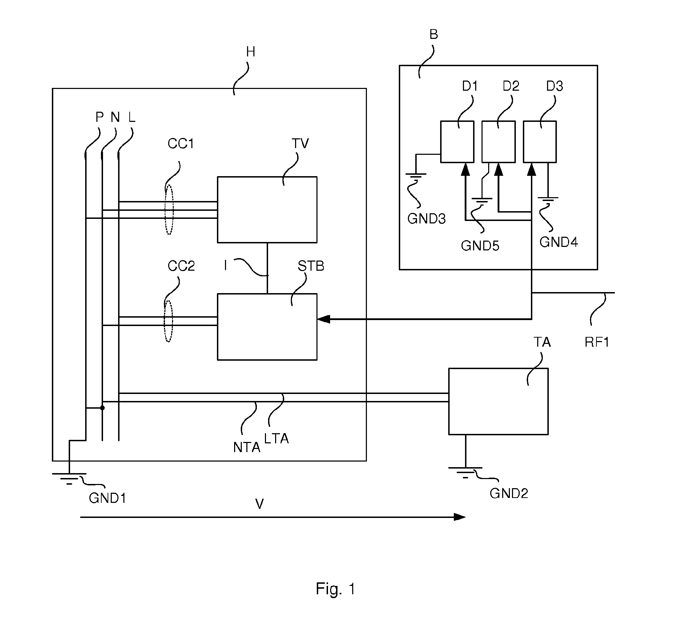

In figures 1 to 7, the modules shown are functional units that may or may not correspond to physically distinguishable units. For example, these modules or some of them are grouped together in a single component, or constituted of functions of the same software. On the contrary, according to other embodiments, some modules are composed of separate physical entities.

In a general but non-restrictive way, the invention relates to an electronic device configured to receive radio frequency signals from a local cable network, the device being integrated into an electrical installation suitable for supplying electrical power thereto and for supplying power to at least one other device, the two devices being connected to the electrical power supply network, one via the intermediary of a power cord comprising an earthing conductor, the other via the intermediary of a power cord without earthing conductor. The disparities in earth connection between the two devices being such that, according to characteristics of the electrical installation and interconnection conditions of the devices, induced current loops may arise.

**Figure 1** shows a complete installation enabling the supply of power to and the operation of electronic devices such as a cable television receiver-decoder device STB and a television set TV. Receiver-decoder device STB is connected to a cable RF1 for receiving radio frequency signals by cable from a cable head-end not shown. Receiver-decoder STB is connected to the electrical power supply network, also called the mains network or mains P, N, L via the intermediary of a power cord CC2 suitable for supplying power to class 2 (electrical class 2) devices. Network P, N, L comprises a phase conductor L, a neutral conductor N and a protective conductor P; the conductors N and P being connected. It should however be noted that the induced current loop problems may arise in other neutral point arrangements, that is to say whether the neutral conductor N is connected to the protective conductor P (and therefore to earth) or not. Television set TV is connected to the mains network via the intermediary of a power cord CC1 suitable for the supply of power to class 1 devices (electrical class 1). The two devices (or items of equipment) are used in a same dwelling, in a house H whose mains network P, N L is connected to earth by an earthing element GND1. The earthing element can be a stake made of conductive material, a wire mesh or any other element designed for connecting earth conductors of electrical installations to earth. The electrical network of house H is supplied with power by a power supply transformer TA, serving the network of house H via the intermediary of the phase conductor LTA and neutral conductor NTA. The set of earth conductors of the local power supply transformer TA are connected to earth by an earthing element GND2 similar to element GND1, in terms of function. According to the type of elements used for the earthing (stake or mesh, for example), their characteristics (their dimensions or their wear state, for example) and the nature of the ground, disparities exist in terms of contact resistance and therefore in terms of equivalent earthing resistance. Thus, differences in potentials may arise between two earthing connection elements, such as, for example, GND1 and GND 2 and result in the presence of voltages such that the voltage V shown is equal to the difference between potentials GND2 and GND1. These voltages arising from current variations around the earth connection elements, notably due to events and modifications on the electrical installation (starting, switching and stopping operations, etc.).

The overall installation of figure 1 further comprises a building B next to dwelling house H. In this building, items of equipment or devices D1, D2 and D3 are used, respectively connected to earth by earth connections GND3, GND5 and GND4. Items of equipment D1, D2 and D3 in building B are, for example, cable digital television decoder-receivers, suitable for receiving audiovisual programs received from cable RF1 which also supplies receiver-decoder STB of house H with radio frequency signals encoding the audiovisual programs. Cable RF1 therefore constitutes an equipotential common to the installations of building B and of house H.

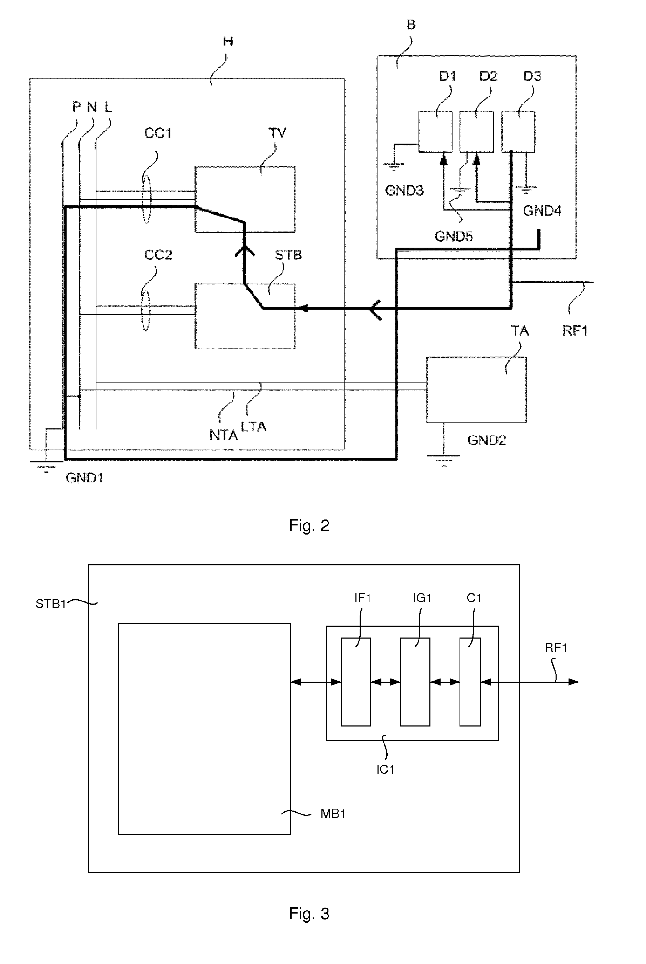

**Figure 2** shows the installation shown in figure 1 in the presence of an example of induced current loop and shows the presence of the current loop between building B and house H. This configuration corresponds to the prior art. There is no galvanic isolation enabling avoidance of the occurrence of a current loop. The current loop is shown by a bold line in figure 2. It traverses a path running from item of equipment D3 to receiver-decoder STB, then via HDMI link I, to television set TV connected to network P, N, L by power cord CC1. The current loop therefore finds a path via devices STB and TV and particularly via a connection cable I (HDMI cable) which thus sometimes acts as a fuse between the two items of equipment when there is a difference in potential between an earthing point in building B and the earthing point of house H and when receiver-decoder STB is not equipped according to the concept of the invention. Figure 2 shows a current loop liable to arise if decoder STB is configured according to the prior art. An example of conditions resulting in unpredictable variations in earth connection potentials is the undesirable variations in current consumption in the circuits of the electrical network of building B. The sudden switching operations of home equipment results in variations in electrical consumption such that the current fluctuations conducted to earth vary the electrical potentials at the earth connection elements (specific to the connections GND3, GND4 and GND5). The items of equipment with high consumption and whose activation and deactivation are liable to result in significant current variations at the earthing elements are for example washing machines, cooking and heating equipment or lift motors.

**Figure 3** shows a decoder-receiver STB1 for audiovisual programs received via a cable RF1, according to a first embodiment of the invention. Decoder STB1 comprises a motherboard MB1 and a communication interface module IC1. The communication interface IC1 is suitable for the connection of motherboard MB1 with a radio frequency signal distribution cable RF1. Motherboard MB1 comprises a set of circuits suitable for receiving and decoding signals carrying audiovisual programs and received via the intermediary of a cable network. These circuits are not described in detail here, their description not being useful to the understanding of the invention. They comprise, amongst others, a control unit and volatile memory, non-volatile memory, a tuner, a demodulator, a demultiplexer, a decoder, a display memory and interface circuits for outputting to a reproduction device. The communication interface comprises an interfacing circuit IF1, a galvanic isolation device IG1 and a connector C1 suitable for the connection of a cable such as cable RF1.

According to a first embodiment of the invention, galvanic isolation device IG1 comprises a transformer with windings.

The signals received by cable RF1 are transmitted to the interfacing circuit IF1 by magnetic coupling between the windings of the transformer.

According to a variant of the first embodiment of the invention, galvanic isolation device IG1 comprises two capacitors which enable the transmission of highfrequency signals and have an infinite DC impedance. One of the capacitors is used to link the signals coding the audiovisual programs received over link RF1, the other is used for the small signal earth connection.

According to another variant, the galvanic isolation device can comprise an optocoupler (optical device).

One of the main advantages, stemming from the inventive concept, is the galvanic isolation between the remote items of equipment connected to cable link RF1, which makes it possible to avoid the creation of current loops induced via receiver-decoder STB1 and the probable destruction of all or part of the circuits of device STB1, of the HDMI cable (or cord) (link I) or all or part of the circuits of television set TV.

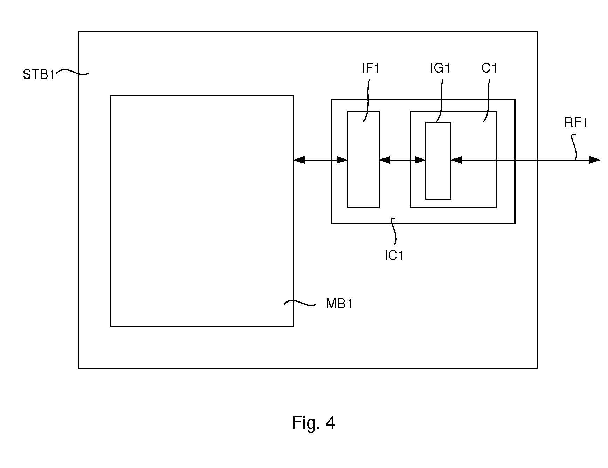

**Figure 4** shows a decoder-receiver STB1 for audiovisual programs received via cable RF1, according to a second embodiment of the invention. According to this embodiment and according to a characteristic of the invention which consists in galvanically isolating receiver-decoder STB1 from the source of the signal connected to cable RF1, a galvanic isolation device IG1 is integrated into cable connector C1. Advantageously this embodiment makes it possible to implement the connector on a module separate from the motherboard, such as interfacing module (communication interface) IC1 or on motherboard MB1 itself.

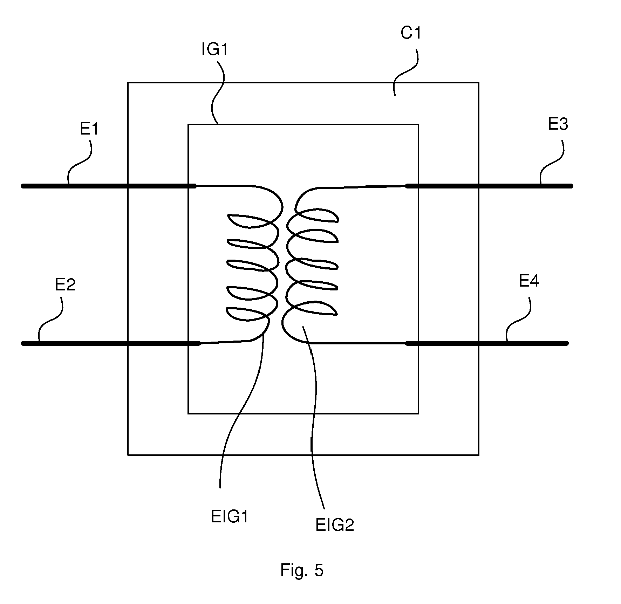

**Figure 5** shows the device (connector) C1 for connecting to radio frequency signal distribution cable RF1 according to the second embodiment of the invention.

Connector C1 comprises 4 electrical connection elements E1, E2, E3, E4. Elements E3 and E4 constitute the plug for the connection of cable RF1. Elements E1 and E2 constitute connection terminals making it possible to transmit signals to interfacing circuit IF1. These connection terminals are for example terminals soldered onto receiving areas of a printed circuit. Galvanic isolation device IG1 comprises two galvanic isolation elements EIG1 and EIG2. EIG1 and EIG2 are two windings of a transformer used for the magnetic coupling of received signals.

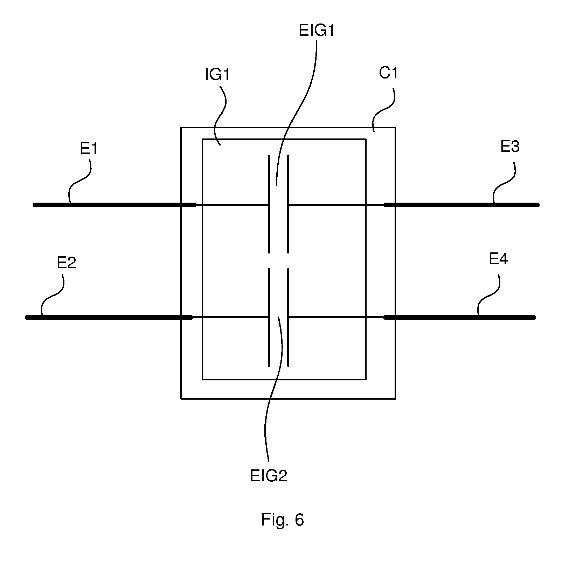

**Figure 6** shows the device (connector) for connecting to a distribution cable of figure 5 according to a variant of the second embodiment of the invention. Elements E3 and E4 constitute the plug for the connection of cable RF1 in this variant too. The transmission of signals is carried out by means of two capacitive elements. Galvanic isolation device IG1 comprises two galvanic isolation elements EIG1 and EIG2. EIG1 and EIG2 are two capacitors used for the coupling of received signals.

According to a variant of the first or second embodiment of the invention, the decoder is equipped with a rear face made of non-conductive (isolating) material such as plastic, for example. The rear face bearing connector C1 and preventing the creation of contact to the earth, and the electrical continuity between link RF1 and the earth, thus ensuring the galvanic isolation between the earth of the connector, and therefore that of cable link RF1 and the earth of receiver-decoder STB1.

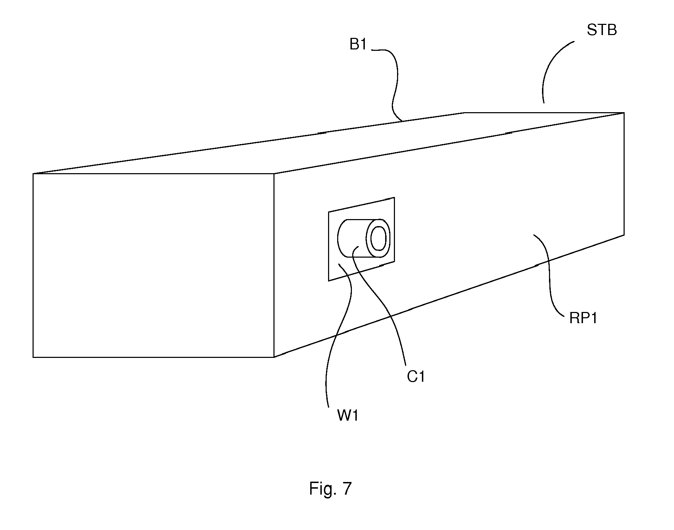

**Figure 7** shows another variant embodiment of the invention. According to this embodiment and in addition to the galvanic isolation inherent in the means previously described, the rear face of the cabinet B1 of receiver-decoder STB is suitable for increasing the galvanic isolation sought.

Thus, the rear face RP1 of metal casing cabinet B1 of receiver-decoder STB is mainly made of conductive material, such as for example metal, which makes it possible to constitute a shielding for the electromagnetic emissions and electrostatic discharge, but has, around connector C1 an open window in the metal filled by an element W1 made of isolating material, such as for example plastic, this element W1 bearing connector C1. Advantageously this variant makes it possible to retain a good immunity to electromagnetic and electrostatic interference, while facilitating galvanic isolation between the earth of cable link RF1 and the earth of receiver-decoder STB1.

In other words, electronic device STB1 (also called STB, according to the figures) comprises a wired communication interface IC1 for the reception of signals, wired communication interface IC1 comprises a connector C1 suitable for the connection of cable link RF1 and electronic interfacing circuit IF1 for transmitted signals, wired communication interface IC1 is realized so that connector C1 and interfacing circuit IF1 are both connected by circuit IG1 suitable for galvanic isolation in order to ensure the absence of DC signal continuity and the absence of earth connection via connector C1.

Device STB1 is suitable for receiving audiovisual programs via an interface IC1 suitable for receiving signals over a cable network.

The cable network is a collective network.

Device STB1 comprises a motherboard MB1 and a connection cable interfacing module IC1, module IC1 is separate from motherboard MB1, module IC1 comprises connector C1.

Also, according to a variant, electronic device STB1 comprises a mechanical casing having a face bearing connector C1, the face being made of isolating material.

According to another variant the electronic device comprises a mechanical casing having a face bearing connector C1, the face is conductive and comprises a window wherein is inserted an element made of isolating material placed around connector C1. According to this variant, the presence of such an isolating material in a window having a minimum predetermined size, in addition of the other above-cited features for making galvanic insulation in the signal connection, strengthens the overall performance of the galvanic insulation of the signal connection and increases the capacity to avoid the unexpected disparities in electrical potentials due and some induced current loops, capable to cause degradations and to destroy some circuits. The size of the piece made of isolation material, mounted in a window of the face bearing the connector, is determined by some insulation tests made on the electronic device. The test are typically made during the development phase of the electronic device, in a test laboratory of electronic. Advantageously, the plastic (or the piece made of isolating material) piece is square, rectangular or circular, depending on the expected performances and considering the cosmetic design of the face bearing the connector and the cosmetic design of the whole electronic device.

The invention therefore relates, according to one of the characteristics of the inventive concept, which is galvanic isolation, to a connector suitable for the connection of a cable for receiving radio frequency signals. The connector comprises at least four electrical connection elements, respectively connected pairwise via the intermediary of a galvanic isolation device.

According to variants, the galvanic isolation device is a transformer comprising at least two windings or comprises at least two capacitors.

According to another variant, galvanic isolation can be achieved between communication module IC1 and motherboard MB1 in the case where the mechanical casing face bearing connector C1 is made of non-conductive (isolating) material, in its entirety or in a zone corresponding to a window cut in the conductive material and located around connector C1. Galvanic isolation can also be achieved either by the use of a transformer, or by the use of capacitors, or by the use of an opto-coupler.

Advantageously, integrating a galvanic isolation device into device STB1 makes it possible to reduce the overall cost of the installation protected against the occurrence of current loops and makes it possible to avoid the risk of damage to equipment.

The invention is not limited to the embodiments described above but also applies to any device enabling the reception of signals received by cable and comprising galvanic isolation means configured to prevent the occurrence of induced current loops when two devices respectively connected to earth and not connected to earth are interconnected by a wired link.

The embodiments detailed above describe the invention in an item of equipment of cable digital television receiver-decoder type. However, the invention does not apply solely to this type of equipment but to any device comprising an interface for connecting by wired link to another item of equipment, the device being configured to operate in an electrical environment where items of equipment of different electrical classes coexist and comprising for certain items an earthing connection and being, for others, without earthing connection.

The invention also applies, for example, to a desktop computer, a laptop computer, a tablet, a television set, a hi-fi system or a gateway for accessing a broadband communication network.

## Claims

1. Electronic device (STB1) suitable for receiving audiovisual programs received via an interface suitable for the reception of signals over a cable network, comprising a connector (C1) suitable for the connection of a cable (RF1) and at least one electronic interfacing circuit (IF1) for said signals, said interface (IC1) being **characterized in that**
- said connector (C1) and said interfacing circuit (IF1) are connected by a circuit (IG1) suitable for galvanic isolation in order to ensure the absence of DC signal continuity and the absence of earth connection via said connector (C1), and **in that**
- said device comprises a mechanical casing (B1) having a face (RP1) bearing said connector (C1), said face (RP1) being conductive and comprising a window wherein is inserted an element (W1) made of isolating material placed around said connector (C1), or said face (RP1) being not conductive.

2. Electronic device according to claim 1, **characterized in that** said cable network is a collective network.

3. Electronic device according to any one of the preceding claims **characterized in that** it comprises a motherboard (MB1) and a connection cable interfacing module (IC1), said module being separate from said motherboard, said module comprising said connector (C1).
